**Europäisches Patentamt**

**European Patent Office**

**Office européen des brevets**

(19)

(11) Veröffentlichungsnummer: **0 352 848**

**A2**

(12) # EUROPÄISCHE PATENTANMELDUNG

(21) Anmeldenummer: **89201898.7**

(22) Anmeldetag: **19.07.89**

(51) Int. Cl.⁴: **G08B 23/00 , G08B 3/10**

(30) Priorität: **25.07.88 AT 1899/88**

(43) Veröffentlichungstag der Anmeldung:
**31.01.90 Patentblatt 90/05**

(84) Benannte Vertragsstaaten:
**AT CH DE FR GB LI**

(71) Anmelder: **N.V. Philips' Gloeilampenfabrieken**
**Groenewoudseweg 1**
**NL-5621 BA Eindhoven(NL)**

(72) Erfinder: **Schranz, Hans**
**INT. OCTROOIBUREAU B.V. Prof. Holstlaan 6**
**NL-5656 AA Eindhoven(NL)**

(74) Vertreter: **van der Kruk, Willem Leonardus et**
**al**
**INTERNATIONAAL OCTROOIBUREAU B.V.**
**Prof. Holstlaan 6**
**NL-5656 AA Eindhoven(NL)**

(54) **Elektronische Baugruppen aufweisendes System mit mindestens einem Mikroprozessor.**

(57) Ein elektronische Baugruppen (6, 7, 8, 9, 15, 19, 20, 27, 28, 35, 44) aufweisendes System (1) weist mindestens einen Mikroprozessor (6) auf, der zur Steuerung des Betriebes des Systems (1) vorgesehen ist und der den ordnungsgemäßen Betrieb überwacht und der beim Feststellen einer Betriebsstörung ein der jeweils festgestellten Betriebsstörung zugeordnetes Steuersignal periodisch wiederholend erzeugt, das einen Warnsignalgenerator (47) steuert, der entsprechend dem Steuersignal ein Warnsignal erzeugt, das als wahrnehmbares Warnereignis wiedergegeben wird. Der Mikroprozessor (6) erzeugt als Steuersignale Folgen (90) von binär kodierten Steuerimpulszügen (91, 95), die aus einer Anzahl N seriell aufeinanderfolgenden, entsprechend der jeweils festgestellten Betriebsstörung binär kodierten Steuerimpulszügen (91, 95) bestehen, und der Warnsignalgenerator (47) erzeugt korrespondierend zu den Folgen (90) von binär kodierten Steuerimpulszügen (91, 95) Folgen (97) von binär kodierten Warnsignalzügen (98, 102), die als Folgen (106) von binär kodierten Warnereignissen (104, 105) wiedergegeben werden.

Fig.1

# Elektronische Baugruppen aufweisendes System mit mindestens einem Mikroprozessor

Die Erfindung bezieht sich auf ein elektronische Baugruppen aufweisendes System mit mindestens einem Mikroprozessor, der zur Steuerung des Betriebes des Systems vorgesehen ist und der den ordnungsgemäßen Betrieb des Systems überwacht und das Auftreten von unterschiedlichen Betriebsstörungen feststellt und der beim Feststellen einer Betriebsstörung ein der jeweils festgestellten Betriebsstörung zugeordnetes Steuersignal periodisch wiederholend erzeugt, das einem Warnsignalgenerator zugeführt wird, der entsprechend dem ihm jeweils zugeführten Steuersignal ein Warnsignal erzeugt und abgibt, das als wahrnehmbares Warnereignis wiedergegeben wird, das die jeweils festgestellte Betriebsstörung kennzeichnet.

Bei einem im Handel erhältlichen System der eingangs angeführten Gattung handelt es sich um einen sogenannten Kassettenwechsler, in den mehrere je ein Magnetband als Aufzeichnungsspeicher enthaltende Kassetten einsetzbar sind und der über eine Telefonschnittstellenschaltung an ein Telefonnetz anschließbar ist, um von einem an einem entfernten Ort befindlichen Benützer über das Telefonnetz zu dem Kassettenwechsler übermittelte Diktate auf den Magnetbändern der Kassetten aufzeichnen zu können. Der Kassettenwechsler weist zur Steuerung seines Betriebes einen Mikroprozessor auf, der den ordnungsgemäßen Betrieb des Kassettenwechslers überwacht. Beim Auftreten von unterschiedlichen Betriebsstörungen erzeugt der Mikroprozessor diesen Betriebsstörungen zugeordnete Steuersignale, die einem Warnsignalgenerator zugeführt werden, der daraufhin die jeweilige Betriebsstörung kennzeichnende Warnsignale erzeugt, die als gehörmäßig wahrnehmbare Warnereignisse, also als unterscheidbare Warntöne, wiedergegeben werden. Von diesen Warntönen werden einige nur vom Kassettenwechsler selbst wiedergegeben, um einen Bediener des Kassettenwechslers hinsichtlich einer festgestellten Betriebsstörung zu alarmieren, und andere nur über die Telefonschnittstellenschaltung und das Telefonnetz zu dem am entfernten Ort befindlichen Benützer übermittelt und dort wiedergegeben, um den Benützer hinsichtlich einer festgestellten Betriebsstörung zu alarmieren, und weitere sowohl vom Kassettenwechsler selbst als auch am entfernten Ort wiedergegeben. Dabei weist der Warnsignalgenerator einen programmierbaren Tonsignalgenerator auf, dem vom Mikroprozessor als Steuersignale 8-Bit-Worte in paralleler Weise zugeführt werden und der entsprechend der Konfiguration dieser 8-Bit-Worte unterschiedliche Warnsignale erzeugt, die sich in ihrer Frequenz und/oder Dauer voneinander unterscheiden. Bei einem derartigen System hat sich herausgestellt, daß die mit diesen Warnsignalen erzeugten Warntöne, die sich hinsichtlich ihrer Frequenz und/oder Dauer voneinander unterscheiden, nur in einer beschränkten Anzahl von den Benützern mit Sicherheit voneinander unterscheidbar sind. Bei einer größeren Anzahl von solchen Warntönen nimmt die Fehlinterpretation dieser Warntöne stark zu. Es werden deshalb bei dem bekannten System nur relativ wenige Warntöne erzeugt, so daß nur auf eine dementsprechend beschränkte Anzahl von Betriebsstörungen akustisch aufmerksam gemacht werden kann.

Die Erfindung hat sich zur Aufgabe gestellt, die vorstehend angeführten Schwierigkeiten zu beseitigen und ein System der eingangs angeführten Gattung so auszubilden, daß mit demselben solche wahrnehmbare Warnereignisse erzeugbar sind, die sich auch bei einer großen Anzahl von unterschiedlichen Warnereignissen leicht und fehlerfrei voneinander unterscheiden lassen. Hiefür ist die Erfindung dadurch gekennzeichnet, daß der Mikroprozessor als Steuersignale Folgen von binär kodierten Steuerimpulszügen periodisch wiederholend erzeugt, die aus einer Anzahl N seriell aufeinanderfolgenden, entsprechend der jeweils festgestellten Betriebsstörung binär kodierten Steuerimpulszügen bestehen, die dem Warnsignalgenerator zugeführt werden, und daß der Warnsignalgenerator als Warnsignale korrespondierend zu den ihm zugeführten Folgen von binär kodierten Steuerimpulszügen Folgen von binär kodierten Warnsignalzügen erzeugt und abgibt, die aus derselben Anzahl N seriell aufeinanderfolgenden, korrespondierend zu den binär kodierten Steuerimpulszügen binär kodierten Warnsignalzügen bestehen und die als Folgen von binär kodierten Warnereignissen wiedergegeben werden, die aus derselben Anzahl N seriell aufeinanderfolgenden, korrespondierend zu den binär kodierten Steuerimpulszügen binär kodierten Warnereignissen bestehen. Durch die binäre Kodierung der Warnereignisse ist erreicht, daß die aus N einzelnen Warnereignissen bestehenden Folgen von Warnereignissen nur mit Hilfe von zwei voneinander unterschiedlichen Warnereignissen, von denen eines eine binäre Null und das andere eine binäre Eins repräsentiert, gebildet sind, die bei jeder beliebigen Aufeinanderfolge dieser beiden Warnereignisse von den Benützern leicht und fehlerfrei voneinander unterscheidbar sind. Auf diese Weise ist gewährleistet, daß auch bei iner großen Anzahl von unterschiedlichen Folgen von binär kodierten Warnereignissen eine einwandfreie Unterscheidung dieser Folgen möglich ist. Da die Folgen von binär kodierten Warnereignissen insgesamt je aus N einzelnen Warnereignissen bestehen, ist eine große Anzahl von unterschiedlichen Folgen von binär kodierten Warnereignissen erzeugbar, die sich in der Aufeinanderfolge der durch die binär kodierten Warnereignisse repräsentierten binären Werte unterscheiden, wobei jede solche Aufeinanderfolge der binären Werte eine bestimmte Betriebsstörung kennzeichnet. Wenn die Zahl N beispielsweise mit 8 gewählt wird, sind maximal 256 unterschiedliche Folgen von binär kodierten Warnereignissen erzeugbar und folglich ebensoviele Betriebsstörungen anzeigbar und eindeutig voneinander unterscheidbar. Diese Folgen von binär kodierten Warnereignissen können akustisch wahrnehmbare binär kodierte Warntonfolgen oder optisch wahrnehmbare binär kodierte Warnlichtfolgen sein, die einzeln oder gemeinsam erzeugt werden können. Beispielsweise können solche binär kodierten Warntonfolgen unmittelbar von dem erfindungsgemäßen System akustisch wiedergegeben werden, wobei dann ein Benützer des Systems nach mehrmaligem Anhören einer periodisch wiederholend erzeugten binär kodierten Warntonfolge die darin enthaltene Folge der binären Kodierung der Warntöne feststellen kann und daraus beispielsweise unter Zuhilfenahme einer Liste über die verschiedenen Betriebsstörungen die vom Mikroprozessor festgestellte Betriebsstörung ermitteln kann. Falls erwünscht, können solche von dem erfindungsgemäßen System wiedergegebenen binär kodierten Warntonfolgen auch über einen in die Nähe des Systems gehaltenen Telefonhörer und ein Telefonnetz einem an einem entfernten Ort befindlichen ge schulten Servicetechniker übermittelt werden, der dann auf analoge Weise die festgestellte Betriebsstörung ermitteln kann, um diese beispielsweise dem Benützer des Systems über das Telefonnetz mitzuteilen oder sich selbst auf einen Servicebesuch vorbereiten zu können. Auf diese Weise besteht auch die Möglichkeit, daß ein Teil der Betriebsstörungen, insbesondere solche die auf Fehlbedienungen zurückzuführen sind, unmittelbar von dem Benützer des Systems selbst behoben werden können, ohne daß der Servicetechniker hiefür zum Aufstellungsort des Systems kommen muß.

Die von dem Mikroprozessor aufeinanderfolgend erzeugten binär kodierten Steuerimpulszüge können beispielsweise in ihrer Amplitude binär kodiert sein, wobei dann die Bildung der Folgen von binär kodierten Steuerimpulszügen mit Hilfe von zwei Steuerimpulszügen mit unterschiedlichen Amplituden erfolgt, wofür aber ein speziell ausgebildeter Mikroprozessor erforderlich ist. Als vorteilhaft hat sich erwiesen, wenn die von dem Mikroprozessor aufeinanderfolgend erzeugten binär kodierten Steuerimpulszüge in ihrem zeitlichen Ablauf binär kodiert sind. Für diese Art der binären Kodierung der Steuerimpulszüge ist kein spezieller Mikroprozessor erforderlich, sondern sie kann mit jedem einfachen Mikroprozessor leicht realisiert werden.

Die in ihrem zeitlichen Ablauf binär kodierten Steuerimpulszüge können entsprechend ihrer binären Kodierung beispielsweise durch zwei eine unterschiedliche Anzahl von Impulslücken aufweisende Steuerimpulszüge oder auch durch zwei unterschiedlich lange, lückenlose Impulse gebildet sein. Als besonders vorteilhaft hat sich aber erwiesen, wenn die von dem Mikroprozessor aufeinanderfolgend erzeugten, in ihrem zeitlichen Ablauf binär kodierten Steuerimpulszüge entsprechend ihrer binären Kodierung einerseits durch einen lückenlosen, aus einem Impuls bestehenden Steuerimpulszug und andererseits durch einen eine Impulslücke aufweisenden, aus zwei durch die Impulslücke voneinander getrennten Impulsen bestehenden Steuerimpulszug gebildet sind. Zwei solche binär kodierte Steuerimpulszüge sind einfach erzeugbar und hinsichtlich einer einfachen Erzeugung von besonders deutlich voneinander unterscheidbaren binär kodierten Warnereignissen vorteilhaft.

Die von dem Warnsignalgenerator aufeinanderfolgend erzeugten binär kodierten Warnsignalzüge können beispielsweise frequenzmäßig oder amplitudenmäßig binär kodiert sein, wobei dann die Bildung der Folgen von binär kodierten Warnsignalzügen mit Hilfe von zwei Warnsignalzügen mit unterschiedlichen Frequenzen oder unterschiedlichen Amplituden erfolgt. Als vorteilhaft hat sich aber erwiesen, wenn die von dem Warnsignalgenerator aufeinanderfolgend erzeugten binär kodierten. Warnsignalzüge in ihrem zeitlichen Ablauf binär kodiert sind. Diese Art der binären Kodierung der Warnsignalzüge ist einfach und kann mit wenig Aufwand realisiert werden.

Die in ihrem zeitlichen Ablauf binär kodierten Warnsignalzüge können entsprechend ihrer binären Kodierung beispielsweise durch zwei eine unterschiedliche Anzahl von Signallücken aufweisende Warnsignalzüge oder auch durch zwei unterschiedlich lange, lückenlose Warnsignalzüge gebildet sein. Als besonders vorteilhaft hat sich aber erwiesen, wenn die von dem Warnsignalgenerator aufeinanderfolgend erzeugten, in ihrem zeitlichen Ablauf binär kodierten Warnsignalzüge entsprechend ihrer binären Kodierung einerseits durch einen lückenlosen Warnsignalzug und andererseits durch einen eine Signallücke aufweisenden, aus zwei durch die Signallücke voneinander getrennten Signalabschnitten bestehend Warnsignalzug gebildet sind. Auf diese Weise werden Folgen von binär kodierten Warnereignissen mit zwei sich besonders deutlich voneinander unterscheidenden Warnereignissen erzeugt, so daß diese Folgen von binär kodierten Warnereignissen besonders leicht und fehlerfrei voneinander unterscheidbar und erkennbar sind. Im Falle einer akustischen Wiedergabe solcher in ihrem zeitlichen Ablauf binär kodierter Warnsignalzüge ist ein Warnereignis durch einen längeren Ton und das andere Warnereignis durch zwei aufeinanderfolgende kürzere Töne gebildet, die gehörmäßig absolut sicher voneinander unterscheidbar sind.

Im Hinblick auf die Erzeugung der binär kodierten Warnsignalzüge hat sich als vorteilhaft erwiesen, wenn der Warnsignalgenerator einen astabilen Multivibrator aufweist, der in Abhängigkeit von den von dem Mikroprozessor aufeinander folgend erzeugten binär kodierten Steuerimpulszügen ein- und ausschaltbar ist und der an einem Ausgang desselben die binär kodierten Warnsignalzüge abgibt. Hiedurch ist eine einfache Schaltungsausbildung für den Warnsignalgenerator erreicht.

Aufgrund der von dem Mikroprozessor periodisch wiederholend erzeugten Folgen von binär kodierten Steuerimpulszügen erfolgt auch die Erzeugung der Folgen von binär kodierten Warnsignalzügen und der damit erzeugten Folgen von binär kodierten Warnereignissen auf periodisch wiederholende Weise. Um die periodisch wiederholend erzeugten Folgen von binär kodierten Steuerimpulszügen voneinander zu trennen, kann zwischen jeweils aufeinanderfolgenden Folgen von binär kodierten Steuerimpulszügen beispielsweise eine vorgegebene längere Pause vorgesehen sein, wie dies auch von dem eingangs erwähnten, als Kassettenwechsler ausgebildeten bekannten System her bekannt ist. Als vorteilhaft hat sich aber erwiesen, wenn der Mikroprozessor vor jeder der periodisch wiederholend erzeugten Folgen von binär kodierten Steuerimpulszügen ein Initialsteuersignal erzeugt, das dem Warnsignalgenerator zugeführt wird, und der Warnsignalgenerator korrespondierend zu dem ihm zugeführten Initialsteuersignal ein gegenüber den binär kodierten Warnsignalzügen unterschiedliches Initialwarnsignal erzeugt und abgibt, das als gegenüber den binär kodierten Warnereignissen unterschiedliches Initialwarnereignis wiedergegeben wird. Auf diese Weise ist eine durch das Initialwarnereignis gebildete, deutlich wahrnehmbare aktive Kennzeichnung vor dem Beginn jeder Folge von binär kodierten Warnereignissen erreicht, die das Ermitteln der in der Folge von binär kodierten Warnereignissen repräsentierten Aufeinanderfolge der binären Werte noch mehr erleichtert.

Das Initialwarnsignal kann sich beispielsweise amplitudenmäßig oder frequenzmäßig von den binär kodierten Warnsignalzügen unterscheiden. Als vorteilhaft hat sich aber erwiesen, wenn das von dem Warnsignalgenerator erzeugte Initialwarnsignal eine gegenüber der Dauer der binär kodierten Warnsignalzüge unterschiedliche Dauer aufweist. Ein solches Initialwarnsignal ist einfach erzeugbar und mit demselben wird ein sich gut von den binär kodierten Warnereignissen unterscheidendes Initialwarnereignis erhalten.

Weiters hat sich als vorteilhaft erwiesen, wenn bei einem System, das aus mehreren Modulen zusammengesetzt ist, die elektrisch miteinander verbunden sind und die je einen Mikroprozessor aufweisen, die zum Datenaustausch untereinander über mindestens eine Datenleitung miteinander kommunizieren und von denen mindestens ein Mikroprozessor den ordnungsgemäßen Betrieb des Systems überwacht, der den ordnungsgemäßen Betrieb überwachende Mikroprozessor in einem Prüfvorgang die Datenleitung hinsichtlich ihrer ordnungsgemäßen Funktion überprüft und beim Feststellen einer gestörten Datenleitung eine dieser Betriebsstörung entsprechende Folge von binär kodierten Steuerimpulszügen erzeugt. Auf diese Weise ist bei einem solchen System erreicht, daß eine sehr wichtige Voraussetzung für einen ordnungsgemäßen Betrieb, nämlich, daß die Mikroprozessoren eines solchen modular zusammengesetzten Systems untereinander Daten austauschen können, überprüft und bei Nichterfüllung dieser Voraussetzung eine entsprechende Folge von binär kodierten Warnereignissen erzeugt wird.

In diesem Zusammenhang hat sich weiters als vorteilhaft erwiesen, wenn der den ordnungsgemäßen Betrieb überwachende Mikroprozessor in einem Prüfvorgang die modulare Zusammensetzung des aus mehreren Modulen zusammengesetzten Systems, die eine festgelegte Betriebsvorschrift erfüllen muß, hinsichtlich ihrer ordnungsgemäßen Zusammensetzung überprüft und beim Feststellen einer vorschriftswidrigen, fehlerhaften modularen Zusammensetzung des Systems eine dieser Betriebsstörung entsprechende Folge von binär kodierten Steuerimpulszügen erzeugt. Auf diese Weise wird eine weitere wichtige Voraussetzung für einen ordnungsgemäßen Betrieb, nämlich, daß die richtige modulare Zusammensetzung des modular zusammengesetzten Systems vorliegt, überprüft und bei Nichterfüllung dieser Voraussetzung eine entsprechende Folge von binär kodierten Warnereignissen erzeugt.

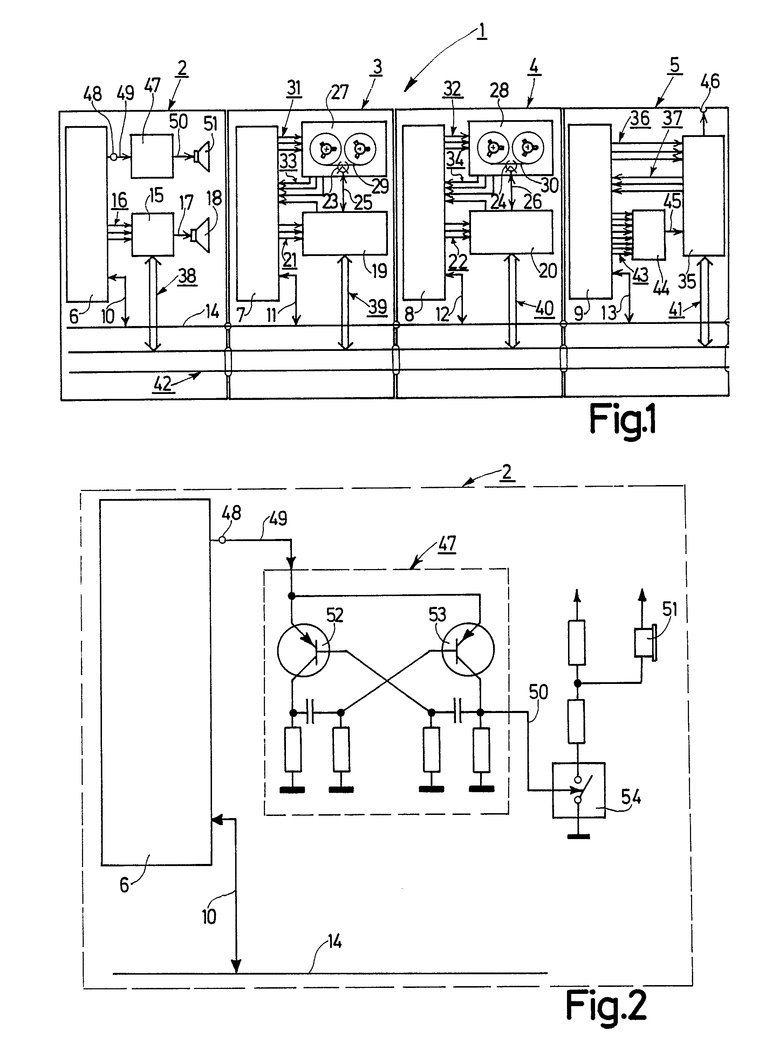

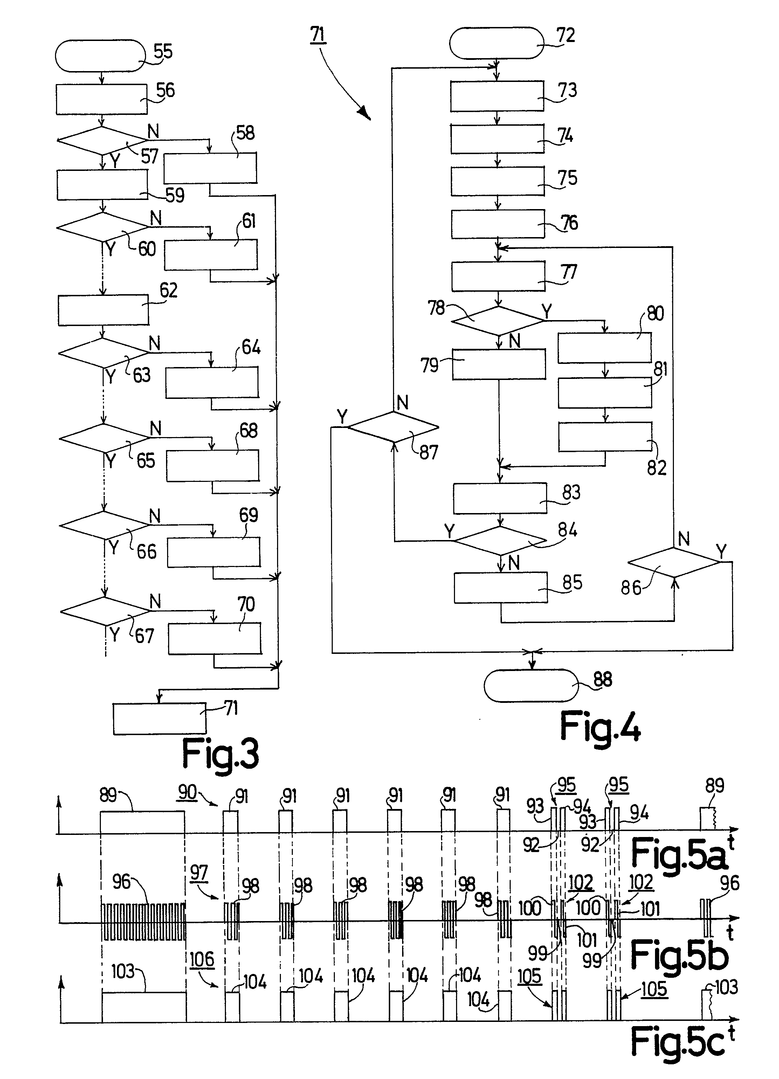

Die Erfindung wird im folgenden anhand eines in den Zeichnungen dargestellten Ausführungsbeispieles, auf das sie jedoch nicht beschränkt sein soll, näher beschrieben. Die Fig. 1 zeigt schematisch ein System zum Aufzeichnen und Wiedergeben von Sprachsignalen auf beziehungsweise von in Kassetten untergebrachten, als Aufzeichnungsspeicher vorgesehenen Magnet bändern, das aus verschiedenen zusammensetzbaren, je einen Mikroprozessor aufweisenden Modulen aufgebaut ist und das einen Steuer-Modul aufweist, der einen als Meister vorgesehenen Mikroprozessor enthält, der den ordnungsgemäßen Betrieb des Systems überwacht und der beim Feststellen von Betriebsstörungen Folgen von binär kodierten Steuerimpulszügen erzeugt, die einen Warnsignalgenerator zum Erzeugen von Folgen von binär kodierten Warnsignalzügen steuern. Die Fig. 2 zeigt schematisch einen Teil des Steuer-Moduls des Systems gemäß Fig. 1, wobei der in diesem Steuer-Modul enthaltene Warnsignalgenerator im Detail dargestellt ist. Die Fig. 3 zeigt ausschnittsweise ein Flußdiagramm der im Zusammenhang mit der vorliegenden Erfindung wesentlichen Teile eines Betriebsprogrammes für den Mikroprozessor des Steuer-Moduls gemäß Fig. 2. Die Fig. 4 zeigt ein Flußdiagramm eines Unterprogrammes für den Mikroprozessor des Steuer-Moduls, das zur Erzeugung der Folgen von binär kodierten Steuerimpulszügen, die den Warnsignalgenerator zu Erzeugung der Folgen von binär kodierten Warnsignalzügen steuern, im Mikroprozessor des Steuer-Moduls abgearbeitet wird. Die Figuren 5a, 5b und 5c zeigen den zeitlichen Ablauf einer Folge von binär kodierten Steuerimpulszügen und den zeitlichen Ablauf einer hiezu korrespondierenden Folge von binär kodierten Warnsignalzügen und symbolisch den zeitlichen Ablauf einer durch die akustische Wiedergabe dieser Folgen von binär kodierten Warnsignalzügen erzeugten Folge von binär kodierten Warntönen.

Die Fig. 1 zeigt ein System 1 zum Aufzeichnen und Wiedergeben von Sprachsignalen auf beziehungsweise von in Kassetten untergebrachten, als Aufzeichnungsspeicher vorgesehenen Magnetbändern und zum Empfangen und Abgeben von Sprachsignalen über ein Telefonnetz. Das System 1 ist modular aufgebaut und besteht in vorliegendem Fall aus vier mechanisch und elektrisch miteinander verbundenen, zu dem System zusammengesetzten Modulen. Bei diesen Modulen handelt es sich um einen Steuer-Modul 2, der die Steuerung des gesamten Systems durchführt, einen ersten Aufzeichnungs- und Wiedergabe-Modul 3 und einen zweiten Aufzeichnungs- und Wiedergabe-Modul 4, mit denen Sprachsignale auf in Kassetten untergebrachten Magnetbändern aufgezeichnet und von diesen wiedergegeben werden kön nen, und einen Telefonschnittstellen-Modul 5, mit dem Sprachsignale aus einem Telefonnetz empfangen und an das Telefonnetz abgegeben werden können und in dem über das Telefonnetz empfangene Steuersignale zur Steuerung von Betriebsfunktionen des Systems 1 verarbeitet werden können.

Jeder der vorerwähnten Module 2, 3, 4 und 5 weist eine Mikroprozessor 6, 7, 8 bzw. 9 auf. Diese Mikroprozessoren arbeiten in einer sogenannten Meister-Sklaven-Konfiguration zusammen, wobei der Mikroprozessor 6 des Steuer-Moduls 2 als Meister und die anderen drei Mikroprozessoren 7, 8 und 9 als Sklaven vorgesehen sind. Der als Meister vorgesehene Mikroprozessor 6 des Steuer-Moduls 2 steuert übergeordnet den Betrieb des Systems 1. Zum bidirektionalen Austauschen von digitalen Daten untereinander sind die Mikroprozessoren 6, 7, 8 und 9 über je eine Verbindungsleitung 10, 11, 12 bzw. 13 an eine durch alle Module 2, 3, 4 und 5 durchgeschliffene Datenleitung 14 angeschlossen.

Der Steuer-Modul 2 enthält weiters eine elektronische Sprachsignal-Verstärkerschaltung 15, die vom Mikroprozessor 6 über Steuerleitungen 16 in ihrer Funktionsweise steuerbar ist und deren Ausgangssignal über eine Signalleitung 17 einem Lautsprecher 18 zur akustischen Wiedergabe zugeführt wird.

Die beiden Aufzeichnungs- und Wiedergabe-Module 3 und 4 enthalten weiters je eine elektronisohe Aufzeichnungs- und Wiedergabe-Verstärkerschaltung 19 bzw. 20, die je über Steuerleitungen 21 bzw. 22 von den Mikroprozessoren 7 bzw. 8 in ihrer Funktionsweise steuerbar sind und mit denen die im Aufzeichnungsbetrieb von ihnen je einem Magnetkopf 23 bzw. 24 über je eine Signalleitung 25 bzw. 26 zugeführten und im Wiedergabebetrieb von dem betreffenden Magnetkopf 23 bzw. 24 über die betreffende Signalleitung 25 bzw. 26 ihnen zugeführten Sprachsignale verarbeitet werden. Jeder der beiden Magnetköpfe 23 und 24 ist Bestandteil einer teilweise elektronischen Laufwerkseinheit 27 bzw. 28. Die Laufwerkseinheiten 27 und 28, die zum Antreiben und Abtasten von in nicht dargestellten Kassetten untergebrachten Magnetbändern 29 und 30 dienen, sind in ihrer Funktionsweise über Steuerleitungen 31 und 32 von den Mikroprozessoren 7 und 8 her steuerbar. Von den Aufzeichnungs- und Wiedergabe-Verstärkerschaltungen 19 une 20 und von den Laufwerkseinheiten 27 und 28 sind Meldeleitungen 33 und 34 zu den Mikroprozessoren 7 und 8 geführt, über die den Mikroprozessoren 7 und 8 Meldesignale über Betriebszustände innerhalb der Aufzeichnungs- und Wiedergabe-Verstärkerschaltungen 19 und 20 und der Laufwerkseinheiten 27 und 28 zuführbar sind. Solche Betriebszustandsmeldesignale können den Mikroprozessoren beispielsweise Meldung darüber machen, ob in eine Laufwerkseinheit eine Kassette eingesetzt ist, ob eine in eine Laufwerkseinheit eingesetzte Kassette gegen Löschen geschützt ist, ob ein Ende eines Magnetbandes einer in eine Laufwerkseinheit eingesetzten Kassette erreicht ist, ob ein Magnetband einer in eine Laufwerkseinheit eingesetzten Kassette gerissen ist, ob der Pegel eines aufzuzeichnenden Sprachsignales ausreichend hoch ist, ob ein Löschoszillator ein Löschsignal abgibt, ob ein Aufzeichnungs- und Widergabe-Verstärker in den Aufnahmebetrieb geschaltet ist und dergleichen.

Der Telefonschnittstellen-Modul 5 enthält weiters eine elektronische Empfangs- und Sende-Verstärkerschaltung 35, die vom Mikroprozessor 9 dieses Moduls 5 über Steuerleitungen 36 in ihrer Funktionsweise steuerbar ist und von der Meldeleitungen 37 zu dem Mikroprozessor 9 geführt sind, über die dem Mikroprozessor 9 Meldesignale über Betriebszustände innerhalb der Empfangs- und Sende-Verstärkerschaltung 35 zuführbar sind. Solche Betriebszustandsmeldesignale können dem Mikroprozessor 9 Meldung darüber machen, ob eine Telefonschleife geschlossen ist, ob der Pegel eines über die Telefonschleife empfangenen Sprachsignales ausreichend hoch ist, ob und welches Steuersignal zur Steuerung einer Betriebsfunktion des Systems über das Telefonnetz dem Telefonschnittstellen-Modul 5 zugeführt wurde und dergleichen.

Die Sprachsignal-Verstärkerschaltung 15 des Steuer-Moduls 2 und die beiden Aufzeichnungs- und Wiedergabe-Verstärkerschaltungen 19 und 20 der Aufzeichnungs- und Wiedergabe-Module 3 und 4 und die Empfangs- und Sende-Verstärkerschaltung 35 des Telefonschnittstellen-Moduls 5 sind je über eine aus mehreren Leitungen bestehende Leitungsverbindung 38, 39, 40 bzw. 41 an eine durch alle Module 2, 3, 4 und 5 durchgeschliffene, aus mehreren Leitungen bestehende Sprachsignal Leitungsverbindung 42 angeschlossen, über die zwischen den an sie über die Leitungsverbindungen 38, 39, 40 und 41 angeschlossenen Verstärkerschaltungen 15, 19, 20 bzw. 35 Sprachsignale austauschbar sind, wobei die Steuerung eines solchen Austausches von Sprachsignalen zwischen den einzelnen Modulen durch Steuerung der Verstärkerschaltungen 15, 19, 20 und 35 mit Hilfe der Mikroprozessor 6, 7, 8 und 9 erfolgt.

In dem Telefonschnittstellen-Modul 5 ist ferner ein an sich bekannter über Steuerleitungen 43 von dem Mikroprozessor 9 dieses Moduls steuerbare elektronischer Alarmsignalgenerator 44 vorgesehen, mit dem Alarmsignale, die sich in bekannter Weise in ihrer Frequenz und/oder Dauer voneinander unterscheiden, erzeugbar sind. Die erzeugten Alarmsignale werden über eine Signalleitung 45 der Empfangs- und Sende-Verstärkerschaltung 35 zugeführt und von dieser einem Anschluß 46 des Telefonschnittstellen-Moduls 5 zugeleitet, über den die Alarmsignale in ein Telefonnetz einspeisbar und einem an einem entfernten Ort befindlichen Benützer des Systems 1 zwecks Alarmierung zuführbar sind. Beispielsweise wird ein solches Alarmsignal zu einem Benützer übertragen, wenn dieser durch Senden eines entsprechenden Steuersignales an das System 1 in einem der beiden Aufzeichnungs- und Wiedergabe-Module 3 und 4 die Aufnahmefunktion zwecks Aufzeichnung eines von ihm über die Telefonleitung übertragenen Diktates einschalten will, sich in diesem ausgewählten Aufzeichnungs- und Wiedergabe-Modul aber keine Kassette befindet.

Weiters weist der Steuer-Modul 2 einen Warnsignalgenerator 47 auf, der von dem als Meister vorgesehenen Mikroprozessor 6 des Steuer-Moduls 2 über eine an einen Ausgang 48 dieses Mikroprozessors angeschlossene Steuerleitung 49 steuerbar ist und der an einer Ausgangleitung 50 Warnsignale abgibt, die einem Lautsprecher 51 zugeführt werden und von diesem akustisch als Warntöne wiedergegeben werden.

In Fig. 2 ist der Warnsignalgenerator 47 des Steuer-Moduls 2 detailliert dargestellt. Wie ersichtlich, handelt es sich bei diesem Warnsignalgenerator 47 in einfacher Weise um einen im wesentlichen mit Hilfe von zwei Transistoren 52 und 53 aufgebauten astabilen Multivibrator. Wenn am Ausgang 48 des Mikroprozessors 6 ein hohes Potential H auftritt, dann wird der astabile Multivibrator 47 eingeschaltet und beginnt zu schwingen und gibt über den Kollektor des Transistors 53 an der den Ausgang des Multivibrators 47 bildenden Ausgangsleitung 50 ein impulsförmiges Warnsignal ab. Die Frequenz des impulsförmigen Warnsignales kann beispielsweise etwa mit 1000Hz gewählt sein. Das impulsförmige Warnsignal wird einem schematisch dargestellten, aus einer Transistorstufe bestehenden elektronischen Schalter 54 zugeführt, der dementsprechend mit der Frequenz des impulsförmigen Warnsignales periodisch geschlossen wird, wodurch der als piezoelektrischer Summer ausgebildete Lautsprecher 51 angeregt wird und einen Warnton mit einer Frequenz von etwa 1000Hz abgibt.

Anhand des in Fig. 3 ausschnittsweise dargestellten Flußdiagrammes sind im folgenden die im Zusammenhang mit der vorliegenden Erfindung wesentlichen Teile des Betriebsprogrammes des als Meister vorgesehenen Mikroprozessors 6 des Steuer-Moduls 2 beschrieben. Beim Block 55 wird das Betriebsprogramm gestartet. Danach erfolgt beim Block 56 die Initialisierung des als Meister vorgesehenen Mikroprozessors 6. Danach wird beim Block 57 geprüft, ob die Datenleitung 14, über die die Mikroprozessoren 6, 7, 8 und 9 miteinander kommunizieren sollen, sich in einem ordnungsgemäßen Betriebszustand befindet, was bei vorliegendem System dann der Fall ist, wenn sie sich auf einem hohen Potential H befindet. Wenn die Prüfung beim Block 57 negativ ausfällt, wobei dann eine Betriebsstörung vorliegt, die beispielsweise dadurch gebildet ist, daß die Datenleitung 14 aufgrund einer Störung ungewollt einen Masseschluß aufweist, dann wird beim Block 58 in ein Störungsnummern-Register R eine der festgestellten Betriebsstörung entsprechende Störungsnummer, in vorliegenden Fall beispielsweise die Störungsnummer "1", eingeschrieben. Wenn hingegen die Prüfung beim Block 57 positiv ausfällt, dann erfolgt beim Block 59 die Initialisierung der als Sklaven vorgesehenen Mikroprozessoren 7, 8 und 9, wobei jeder dieser Mikroprozessoren ein die Art des betreffenden Moduls 3, 4 und 5 kennzeichnendes digitales Kennsignal an den als Meister vorgesehenen Mikroprozessor 6 abgibt und dieser jedem als Sklaven vorgesehenen Mikroprozessor 7, 8 und 9 eine bestimmte Adresse zuordnet. Danach wird beim Block 60 geprüft, ob die Modulkonfi guration des Systems 1 in Ordnung ist. In diesem Zusammenhang ist festzuhalten, daß die modulare Zusammensetzung des aus unterschiedlichen Modulen zusammengesetzten Systems eine festgelegte Betriebsvorschrift erfüllen muß. Beispielsweise darf ein solches System nicht mehr als zwei Telefonschnittstellen-Module aufweisen, muß ein solches System zumindest einen Aufzeichnungs- und Wiedergabe-Modul enthalten und darf aber nicht mehr als vier solche Aufzeichnungs- und Wiedergabe-Module aufweisen. Ob diese Betriebsvorschrift beim Zusammensetzen eines Systems eingehalten wurde, wird also beim Block 60 geprüft. Dies erfolgt dadurch, daß der als Meister vorgesehene Mikroprozessor 6 die an ihn beim Initialisieren von den als Sklaven vorgesehenen Mikroprozessoren 7, 8 und 9 abgegebenen, die Art der betreffenden Module 3, 4 und 5 kennzeichnenden Kennsignale überprüft. Wenn die Prüfung beim Block 60 negativ ausfällt, wird beim Block 61 in das Störungsnummern-Register R eine der beim Block 60 festgestellten Betriebsstörung entsprechende Störungsnummer eingeschrieben. Im vorliegenden Fall beispielsweise die Störungsnummer "2". Wenn hingegen die Prüfung beim Block 60 positiv ausfällt, dann wird der Programmablauf über weitere nicht dargestellte Blöcke fortgesetzt, bis der Block 62 erreicht wird. Beim Block 62 wird beispielsweise ein Befehlsignal zum Einschalten der Betriebsart Aufnahme im ersten Aufzeichnungs- und Wiedergabe-Modul 3 erzeugt, das über die Datenleitung 14 dem Mikroprozessor 7 dieses Moduls 3 übermittelt wird. Danach wird beim Block 63 geprüft, ob in dem Modul 3 die Betriebsart Aufnahme eingeschaltet wurde. Dies erfolgt so, daß für eine vorgegebene Zeitspanne auf ein Rückmeldesignal von dem Mikroprozessor 7 des Moduls 3 zu dem Mikroprozessor 6 des Steuer-Moduls 2 gewartet wird, welches Rückmeldesignal angibt, daß in dem Modul 3 tatsächlich die Betriebsart Aufnahme eingeschaltet wurde. Wenn die Prüfung beim Block 63 negativ ausfällt, wird in das Störungsnummer-Register R eine der beim Block 63 festgestellten Betriebsstörung entsprechende Störungsnummer eingeschrieben. Im vorliegenden Fall beispielsweise die Störungsnummer "k". Im weiteren Programmablauf wird an einer Vielzahl von Stellen eine Überwachung des ordnungsgemäßen Betriebes und der Durchführung der Betriebsfunktionen des Sy stems vorgenommen, was in vorliegendem Flußdiagramm mit den Blöcken 65, 66 und 67 angedeutet ist. Immer dann wenn eine Prüfung in einem der Blöcke 65, 66 bzw. 67 negativ ausfällt, wird eine der festgestellten Betriebsstörung entsprechende Störungsnummer in das Störungsnummern-Register R eingeschrieben. In vorliegendem Fall wird beim Block 68 die Störungsnummer "n", beim Block 69 die Störungsnummer "n + 1" und beim Block 70 die Störungsnummer "z" in das Störungsnummern-Register R eingeschrieben. Nach dem Einschreiben einer Störungsnummer in das Störungsnummern-Register R, was gemäß dem vorliegenden Flußdiagramm bei den Blöcken 58, 61, 64, 68, 69 und 70 erfolgt, wird der Programmablauf beim Block 71 fortgesetzt. Beim Block 71 wird ein Unterprogramm zur Erzeugung eines Steuersignales für den Warnsignalgenerator 47 abgearbeitet. Das Flußdiagramm dieses Unterprogrammes ist in Fig. 4 detailliert dargestellt und wird nachfolgend noch beschrieben.

Wie aus dem anhand der Fig. 3 beschriebenen Flußdiagramm hervorgeht, überwacht der als Meister vorgesehene Mikroprozessor 6 des Steuer-Moduls 2 den ordnungsgemäßen Betrieb des Systems 1 und die ordnungsgemäße Durchführung der Betriebsfunktionen des Systems 1 und stellt das Auftreten von verschiedenen unterschiedlichen Betriebsstörungen fest. Beim Feststellen einer solchen Betriebsstörung wird dabei eine der festgestellten Betriebsstörung zugeordnete Störungsnummer in ein hiefür vorgesehenes Störungsnummern-Register R eingeschrieben. Anhand des Flußdiagrammes gemäß Fig. 3 sind nur drei Fälle von Betriebsstörungen beschrieben, in denen eine Störungsnummer in das Störungsnummern-Register R eingeschrieben wird. Eine solche Störungsnummer kann in einer Vielzahl anderer Fälle in das Störungsnummern-Register R eingeschrieben werden, beispielsweise wenn in einen Aufzeichnungs- und Wiedergabe-Modul 3 bzw. 4 keine Kassette eingelegt ist, wenn eine eingelegte Kassette gegen Löschen geschützt ist, wenn das Ende des Magnetbandes einer eingelegten Kassette erreicht ist und dergleichen.

Wie aus der nun nachfolgenden Beschreibung hervorgeht, erzeugt der Mikroprozessor 6 des Steuer-Moduls 2 beim Feststellen einer Betriebsstörung ein der jeweils festgestellten Be triebsstörung zugeordnetes Steuersignal in periodisch wiederholender Weise. Das Steuersignal wird über den Ausgang 48 des Mikroprozessors 6 und die Steuerleitung 49 dem Warnsignalgenerator 47 zugeführt, der entsprechend dem ihm jeweils zugeführten Steuersignal ein Warnsignal erzeugt, das einem Lautsprecher 51 zugeführt wird, der entsprechend dem ihm zugeführten Warnsignal ein akustisch wahrnehmbares Warnereignis wiedergibt.

Im folgenden ist anhand der Fig.4 das Flußdiagramm des Unterprogrammes zur periodisch wiederholenden Erzeugung des Steuersignales für den Warnsignalgenerator 47 beschrieben. Der Programmablauf des Unterprogrammes gemäß Fig.4 wird beim Block 72 gestartet. Beim Block 73 wird danach der Ausgang 48 des Mikroprozessors 6 für eine Sekunde auf ein niedriges Potential L geschaltet. Beim Block 74 wird danach der Ausgang 48 für zwei Sekunden auf ein hohes Potential H geschaltet. Beim Block 75 wird danach der Ausgangs 48 für eine Sekunde wieder auf ein niedriges Potential L geschaltet. Auf diese Weise wird beim Block 74 ein zwei Sekunden lang andauerndes impulsförmiges Initialsteuersignal erzeugt.

Beim nachfolgenden Block 76 wird in einen Bit-Zähler Z der Wert "7" eingeschrieben. Danach wird beim Block 77 der Wert jenes Bits aus dem Störungsnummern-Register R ermittelt, dessen Bit-Nummer mit dem Wert im Bit-Zähler Z übereinstimmt. Da zuvor beim Block 76 in den Bit-Zähler Z der Wert "7" eingeschrieben wurde, wird dementsprechend beim erstmaligen Abarbeiten des Blockes 77 der Wert des höchstwertigen Bits mit der Bit-Nummer "7" aus dem Störungsnummern-Register R ermittelt. Danach wird beim Block 78 geprüft, ob der Wert des beim Block 77 ermittelten Bits gleich "1" ist. Wenn diese Prüfung negativ ausfällt, wird beim Block 79 der Ausgang 48 des Mikroprozessors 6 für 300msec auf ein hohes Potential H geschaltet. Auf diese Weise wird, wenn das beim Block 77 ermittelte Bit nicht den Wert "1", sondern den Wert "0" aufweist, ein für 300msec auftretender, lückenloser, aus einem 300msec langen Impuls bestehender Steuerimpulszug erzeugt. Wenn die Prüfung beim Block 78 positiv ausfällt, wird beim Block 80 zuerst der Ausgang 48 des Mikroprozessors 6 für 100msec auf ein hohes Potential H geschaltet. Danach wird beim Block 81 der Ausgang 48 für 100msec auf ein niedriges Potential L geschaltet. Danach wird beim Block 82 der Ausgang 48 für 100msec auf ein hohes Potential H geschaltet. Auf diese Weise wird, wenn das beim Block 77 ermittelte Bit den Wert "1" aufweist, ein für 300msec auftretender, eine Impulslücke von 100msec aufweisender, aus zwei durch die Impulslücke voneinander getrennten, je 100msec langen Impulsen bestehender Steuerimpulszug erzeugt.

Sowohl nach dem Block 79 als auch nach dem Block 82 wird der Programmablauf beim Block 83 fortgesetzt, bei dem der Ausgang 48 des Mikroprozessors 6 für eine Sekunde auf ein niedriges Potential L geschaltet wird. Auf diese Weise wird zwischen den zuvor erzeugten Steuerimpulszügen jeweils eine Pause mit einer Dauer von einer Sekunde erhalten.

Danach wird beim Block 84 geprüft, ob der Wert im Bit-Zähler Z gleich "O" ist. Wenn diese Prüfung negativ ausfällt, wird nachfolgend beim Block 85 der Wert im Bit-Zähler Z um den Wert "1" dekrementiert. Danach wird beim Block 86 geprüft, ob ein Unterbrechungsbefehl zum Unterbrechen des vorliegenden Programmablaufes vorliegt. Ein solcher Unterbrechungsbefehl kann beispielsweise durch das Betätigen einer Quittierungstaste erzeugt werden. Wenn die Prüfung beim Block 86 negativ ausfällt, wird der Programmablauf beim Block 77 fortgesetzt, wobei dann der Wert jenes Bits aus dem Störungsnummern-Register R ermittelt wird, das die nächst niedrige Bit-Nummer aufweist. Der Programmablauf über die Blöcke 77, 78, 79 bzw. 80, 81, 82 und 83, 84, 85, 86 wird periodisch wiederholt, wobei eine Folge von Steuerimpulszügen entsprechend der Bit-Folge der in dem Störungsnummern-Register R gespeicherten Störungsnummer erzeugt wird, welche Folge von Steuerimpulszügen eine vorgegebene Impulszugfolgefrequenz aufweist.

Wenn beim Block 84 festgestellt wird, daß der Wert im Bit-Zähler Z den Wert "0" aufweist, dann wird nachfolgend beim Block 87 geprüft, ob ein Unterbrechungsbefehl zur Unterbrechung des vorliegenden Programmablaufes vorliegt, wie dies auch beim Block 86 der Fall ist. Wenn diese Prüfung negativ ausfällt, wird der Programmablauf beim Block 73 fortgesetzt, wobei dann die Folge von Steuerimpulszügen nochmals erzeugt wird. Solange beim Block 87 kein Unterbrechungsbefehl festgestellt wird, wird daher jede Folge von Steuerimpulszügen periodisch wiederholend erzeugt. Wenn die Prüfung bei den Blöcken 86 und 87 positiv ausfällt, wird der Programmablauf beim Block 88 fortgesetzt, bei dem das vorliegende Unterprogramm beendet wird.

Durch das Abarbeiten der Blöcke 77, 78, 79 bzw. 80, 81, 82 und 83, 84, 85 und 86 wird als Steuersignal eine Folge von binär kodierten Steuerimpulszügen erzeugt, die aus acht seriell aufeinanderfolgenden binär kodierten Steuerimpulszügen besteht und deren acht aufeinanderfolge Steuerimpulszüge entsprechend der jeweils festgestellten Betriebsstörung in ihrem zeitlichen Ablauf binär kodiert sind. Solange während des Abarbeitens des gesamten Programmablaufes der Block 87 durchlaufen wird, wird eine solche Folge von binär kodierten Steuerimpulszügen aufeinanderfolgend in periodisch wiederholender Weise erzeugt, wobei vor jeder dieser periodisch wiederholend erzeugten Folgen von binär kodierten Steuerimpulszügen ein Initialsteuersignal erzeugt wird.

In der Fig.5a ist eine solche Folge von binär kodierten Steuerimpulszügen dargestellt, wobei als Beispiel angenommen ist, daß in das Störungsnummern-Register R die Störungsnummer "3" eingeschrieben wurde. In Fig.5a ist das Initialsteuersignal mit dem Bezugszeichen 89 und die Folge von binär kodierten Steuerimpulszügen mit dem Bezugszeichen 90 bezeichnet. Die Folge 90 von Steuerimpulszügen, die entsprechend der in das Störungsnummern-Register R eingeschriebenen Störungsnummer "3" binär kodiert sind, weist entsprechend dieser binären Kodierung sechs an das Initialsteuersignal 89 anschließende, lückenlose, je aus einem Impuls bestehende und je einer binären Null entsprechende Steuerimpulszüge 91 und zwei nachfolgende je eine Impulslücke 92 aufweisende, je aus zwei durch die Impulslücke 92 voneinander getrennten Impulsen 93 und 94 bestehende und je einer binären Eins entsprechende Steuerimpulszüge 95 auf. Wie ersichtlich, sind die beiden Steuerimpulszüge 91 und 95 der Folge 90 in ihrem zeitlichen Ablauf binär kodiert und kennzeichnet die Aufeinanderfolge der durch die binär kodierten Steuerimpulszüge 91 und 95 repräsentierten binären Werte die festgestellte Betriebsstörung, der in vorliegendem Fall die Störungsnummer "3" zugeordnet ist.

Die periodisch wiederholend erzeugten Folgen 90 von binär kodierten Steuerimpulszügen 91 und 95 werden wie erwähnt über die Steuerleitung 49 dem als astabilen Multivibrator ausgebildeten Warnsignalgenerator 47 zugeführt. Der astabile Multivibrator 47 erzeugt dabei die in Fig.5b dargestellten Folgen von binär kodierten Warnsignalzügen. Korrespondierend zu dem Initialsteuersignal 89 erzeugt der Warnsignalgenerator ein Initialwarnsignal 96. Korrespondierend zu den Folgen 90 von binär kodierten Steuerimpulszügen 91 und 95 erzeugt der Warnsignalgenerator Folgen 97 von binär kodierten Warnsignalzügen, die korrespondierend zu jedem Steuerimpulszug 91 einen lückenlosen Warnsignalzug 98 und korrespondierend zu jedem Steuerimpulszug 95 einen eine Signallücke 99 aufweisenden, aus zwei durch die Signallücke 99 voneinander getrennten Signalabschnitten 100 und 101 bestehenden Warnsignalzug 102 aufweisen. Wie ersichtlich, sind auch die beiden Warnsignalzüge 98 und 102 in ihrem zeitlichen Ablauf binär kodiert.

Die anhand der Fig.5b beschriebenen Folgen 97 von binär kodierten Warnsignalzügen 98 und 102 werden mit Hilfe des Lautsprechers 51 akustisch als Folgen von binär kodierten Warntönen wiedergegeben, wie dies in Fig.5c symbolisch dargestellt ist. Das Initialwarnsignal 96 wird dabei als zwei Sekunden lang andauernder Initialwarnton 103 wiedergegeben. Die Warnsignalzüge 98 werden je als 300msec lang andauernder, einer binären Null entsprechender Warnton 104 wiedergegeben. Die Warnsignalzüge 102 werden je als für 100msec unterbrochener, aus zwei 100msec lang andauernden Tonabschnitten bestehender, einer binären Eins entsprechender Warnton 105 wiedergegeben. Auf diese Weise ist eine Folge 106 von Warntönen aus zwei in ihrem zeitlichen Ablauf binär kodierten Warntönen 104 und 105 zusammengesetzt, die sich besonders deutlich voneinander unterscheiden, so daß ihre binäre Kodierung durch Anhören fehlerfrei erkannt und damit die durch die gesamte Folge 106 von binär kodierten Warntönen 104 und 105 repräsentierte Aufeinanderfolge der binären Werte und daher die dadurch gekennzeichnete Betriebsstörung mit Sicherheit richtig ermittelt werden kann. Da in vorliegendem Fall die Anzahl der Steuerimpulszüge 91 und 95 jeder Folge 90 von binär kodierten Steuerimpulszügen und dementsprechend die Anzahl der Warnsignalzüge 98 und 102 jeder Folge 97 von binär kodierten Warnsignalzügen und die Anzahl der Warntöne 104 und 105 jeder Folge 106 von binär kodierten Warntönen mit acht gewählt ist, können 256 unterschiedliche Folgen gebildet werden und kann dementsprechend auf 256 Betriebsstörungen des Systems 1 akustisch aufmerksam gemacht werden.

Die Erfindung ist nicht auf das im vorstehend beschriebene Ausführungsbeispiel beschränkt. Beim vorstehend beschriebenen Ausführungsbeispiel sind die Steuerimpulszüge der Steuerimpulszugfolgen und die Warnsignalzüge der Warnsignalzugfolgen in ihrem zeitlichen Ablauf binür kodiert. Für diese Kodierung stehen auch andere Möglichkeiten offen. Beispielsweise können die Steuerimpulszüge in ihrer Amplitude und die Warnsignalzüge in ihrer Frequenz oder die Steuerimpulszüge in ihrer Amplitude und die Warnsignalzüge in ihrem zeitlichen Ablauf oder die Steuerimpulszüge in ihrem zeitlichen Ablauf und die Warnsignalzüge in ihrer Amplitude oder ihrer Frequenz binär kodiert sein. Der Warnsignalgenerator kann auch mit dem Mikroprozessor selbst realisiert werden, wobei sich dann ein gegenüber dem Mikroprozessor externer Warnsignalgenerator erübrigt. Wenn der Warnsignalgenerator mit einem Mikroprozessor realisiert wird, ist es dabei vorteilhaft, die Steuersignalzüge der Warnsignalzugfolgen in ihrem zeitlichen Ablauf binär zu kodieren. Bei dem beschriebenen Ausführungsbeispiel kommunizieren die Mikroprozessoren in serieller Weise über eine einzige Datenleitung; es ist auch möglich, daß die Mikroprozessoren in paralleler Weise über einen aus mehreren Leitungen gebildeten Datenbus kommunizieren, der von einem Mikroprozessor hinsichtlich seines ordnungsgemäßen Betriebes überwacht wird. Die Anzahl der Warnereignisse jeder Warnereignisfolge muß nicht den Wert 8 aufweisen, sondern kann an sich jeden beliebigen Wert, beispielsweise auch den Wert 16 aufweisen, woduch sich die Anzahl der anzeigbaren Betriebsstörungen auf maximal 65.536 erhöht. Bei dem beschriebenen Ausführungsbeispiel handelt es sich um ein elektronische Baugruppen aufweisendes System zum Aufzeichnen und Wiedergeben von Sprachsignalen, also um ein sogenanntes Diktiersystem. Die erfindungsgemäßen Maßnahmen sind aber auch bei anderen elektronische Baugruppen aufweisenden Systemen mit einem Mikroprozessor zur Steuerung des Systembetriebes vorteilhaft, beispielsweise bei Videorecordern, Fernsehgeräten, elektronischen Textverarbeitungsgeräten, elektronischen Druckern, Kopiergeräten und dergleichen. Auch sind die erfindungsgemäßen Maßnahmen bei Systemen vorteilhaft, die aus mehreren derartigen Geräten zusammengestellt sind, beispielsweise bei Gerätekombinationen von Geräten der Unterhaltungselektronik, wie einem Audiokassettenrecorder, einem Plattenspieler, einem Tuner, einem Verstärker und einem Videorecorder, oder bei von einem Personalcomputer gesteuerten Gerätekombinationen von Haushaltsgeräten, wie Elektroherden, Geschirrspülern, Waschmaschinen, Fernsehgeräten und dergleichen, oder bei Gerätekombinationen zur Textverarbeitung, die beispielsweise aus einer Eingabetastureinheit, einem Sichtgerät, einer Speichereinheit und einem Drucker zusammengesetzt sind.

**Ansprüche**

1. Elektronische Baugruppen aufweisendes System mit mindestens einem Mikroprozessor, der zur Steuerung des Betriebes des Systems vorgesehen ist und der den ordnungsgemäßen Betrieb des Systems überwacht und das Auftreten von unterschiedlichen Betriebsstörungen feststellt und der beim Feststellen einer Betriebsstörung ein der jeweils festgestellten Betriebsstörung zugeordnetes Steuersignal periodisch wiederholend erzeugt, das einem Warnsignalgenerator zugeführt wird, der entsprechend dem ihm jeweils zugeführten Steuersignal ein Warnsignal erzeugt und abgibt, das als wahrnehmbares Warnereignis wiedergegeben wird, das die jeweils festgestellte Betriebsstörung kennzeichnet, dadurch gekennzeichnet, daß der Mikroprozessor als Steuersignale Folgen von binär kodierten Steuerimpulszügen periodisch wiederholend erzeugt, die aus einer Anzahl N seriell aufeinanderfolgenden, entsprechend der jeweils festgestellten Betriebsstörung binär kodierten Steuerimpulszügen bestehen, die dem Warnsignalgenerator zugeführt werden, und daß der Warnsignalgenerator als Warnsignale korrespondierend zu den ihm zugeführten Folgen von binär kodierten Steuerimpulszügen Folgen von binär kodierten Warnsignalzügen erzeugt und abgibt, die aus derselben Anzahl N seriell aufeinanderfolgenden, korrespondierend zu den binär kodierten Steuerimpulszügen binär kodierten Warnsignalzügen bestehen und die als Folgen von binär kodierten Warnereignissen wiedergegeben werden, die aus derselben Anzahl N seriell aufeinanderfolgenden, korrespondierend zu den binär kodierten Steuerimpulszügen binär kodierten Warnereignissen bestehen.

2. System nach Anspruch 1, dadurch gekennzeichnet, daß die von dem Mikroprozessor aufeinanderfolgend erzeugten binär kodierten Steuerimpulszüge in ihrem zeitlichen Ablauf binär kodiert sind.

3. System nach Anspruch 2, dadurch gekennzeichnet, daß die von dem Mikroprozessor aufeinanderfolgend erzeugten, in ihrem zeitlichen Ablauf binär kodierten Steuerimpulszüge entsprechend ihrer binären Kodierung einerseits durch einen lückenlosen, aus einem Impuls bestehenden Steuerimpulszug und andererseits durch einen eine Impulslücke aufweisenden, aus zwei durch die Impulslücke voneinander getrennten Impulsen bestehenden Steuerimpulszug gebildet sind.

4. System nach einem der vorhergehenden Ansprüche, dadurch gekennzeichnet, daß die von dem Warnsignalgenerator aufeinanderfolgend erzeugten binär kodierten Warnsignalzüge in ihrem zeitlichen Ablauf binär kodiert sind.

5. System nach Anspruch 4, dadurch gekennzeichnet, daß die von dem Warnsignalgenerator aufeinanderfolgend erzeugten, in ihrem zeitlichen Ablauf binär kodierten Warnsignalzüge entsprechend ihrer binären Kodierung einerseits durch einen lückenlosen Warnsignalzug und andererseits durch einen eine Signallücke aufweisenden, aus zwei durch die Signallücke voneinander getrennten Signalabschnitten bestehenden Warnsignalzug gebildet sind.

6. System nach einem der Ansprüche 2 bis 5, dadurch gekennzeichnet, daß der Warnsignalgenerator einen astabilen Multivibrator aufweist, der in Abhängigkeit von den von dem Mikroprozessor aufeinanderfolgend erzeugten binär kodierten Steuerimpulszügen ein- und ausschaltbar ist und der an einem Ausgang desselben die binär kodierten Warnsignalzüge abgibt.

7. System nach einem der vorhergehenden Ansprüche, dadurch gekennzeichnet, daß der Mikroprozessor vor jeder der periodisch wiederholend erzeugten Folgen von binär kodierten Steuerimpulszügen ein Initialsteuersignal erzeugt, das dem Warnsignalgenerator zugeführt wird, und daß der Warnsignalgenerator korrespondierend zu dem ihm zugeführten Initialsteuersignal ein gegenüber den binär kodierten Warnsignalzügen unterschiedliches Initialwarnsignal erzeugt und abgibt, das als gegenüber den binär kodierten Warnereignissen unterschiedliches Initialwarnereignis wiedergegeben wird.

8. System nach Anspruch 7, dadurch gekennzeichnet, daß das von dem Warnsignalgenerator erzeugte Initialwarnsignal eine gegenüber der Dauer der binär kodierten Warnsignalzüge unterschiedliche Dauer aufweist.

9. System nach einem der vorhergehenden Ansprüche, dadurch gekennzeichnet, daß bei einem System, das aus mehreren Modulen zusammengesetzt ist, die elektrisch miteinander verbunden sind und die je einen Mikroprozessor aufweisen, die zum Datenaustausch untereinander über mindestens eine Datenleitung miteinander kommunizieren und von denen mindestens ein Mikroprozessor den ordnungsgemäßen Betrieb des Systems überwacht, der den ordnungsgemäßen Betrieb überwachende Mikroprozessor in einem Prüfvorgang die Datenleitung hinsichtlich ihrer ordnungsgemäßen Funktion überprüft und beim Feststellen einer gestörten Datenleitung eine dieser Betriebsstörung entsprechende Folge von binär kodierten Steuerimpulszügen erzeugt.

10. System nach Anspruch 9, dadurch gekennzeichnet, daß der den ordnungsgemäßen Betrieb überwachende Mikroprozessor in einem Prüfvorgang die modulare Zusammensetzung des aus mehreren Modulen zusammengesetzten Systems, die eine festgelegte Betriebsvorschrift erfüllen muß, hinsichtlich ihrer ordnungsgemäßen Zusammensetzung überprüft und beim Feststellen einer vorschriftswidrigen, fehlerhaften modularen Zusammensetzung des Systems eine dieser Betriebsstörung entsprechende Folge von binär kodierten Steuerimpulszügen erzeugt.

**Fig.1**

**Fig.2**

Fig.3

Fig.4

Fig.5a

Fig.5b

Fig.5c

2-Ⅱ-PHO 88-506